# EUROPEAN PATENT SPECIFICATION

(11) **EP 2 726 242 B1**
(45) Date of publication and mention of the grant of the patent: **09.05.2018**
(21) Application number: 12733381.3
(22) Date of filing: 27.06.2012
(51) Int. Cl.: B23K 9/12, B23K 9/173, B23K 9/09, B23K 9/073

(54) **METAL CORED WELDING METHOD AND SYSTEM USING ROTATING ELECTRODE**
SCHWEISSVERFAHREN MIT METALLGEFÜLLTER DRAHTELEKTRODE UND SYSTEM MIT ROTIERENDER ELEKTRODE
PROCÉDÉ ET SYSTÈME DE SOUDAGE À ÂME MÉTALLIQUE EN UTILISANT UNE ÉLECTRODE ROTATIVE

(30) Priority: 01.07.2011 US 201161503955 P; 18.06.2012 US 201213526278
(43) Date of publication of application: 07.05.2014
(73) Proprietor: Illinois Tool Works Inc., Glenview, IL 60025 (US)
(72) Inventor: PAGANO, Kevin, Glenview, Illinois 60026 (US); SUMMERS, Kevin, Glenview, Illinois 60026 (US)
(74) Representative: Trinks, Ole
(86) International application number: PCT/US2012/044466
(87) International publication number: WO 2013/006350

(56) References cited:
- JP-A- 9 094 658
- Steve Barhorst: "Metal cored electrode basics", The American Welder, 31 December 2000 (2000-12-31), page 1, XP002685315, American Welding Society Retrieved from the Internet: URL:http://www.aws.org/wj/amwelder/11-00/b arhorst.html [retrieved on 2012-10-16]

## Description

### BACKGROUND

The invention relates generally to welding techniques, and more particularly to improved processes for utilizing metal cored welding wire electrodes for enhanced performance, particularly in automated welding applications. The invention relates to a welding method according to the preamble of claim 1 and to a welding system according to the preamble of claim 7, as for example known from JP 9 094658 A.

A range of techniques have been developed for joining workpieces by welding operations. These include diverse processes and materials, with most modern processes involving arcs developed between a consumable or non-consumable electrode and the workpieces. The processes are often grouped in such categories as constant current processes, constant voltage processes, pulsed processes, and so forth. However, further divisions between these are common, particularly in processes that consume an electrode to add filler metal to the weld. In virtually all such cases, the process selected is highly linked to the filler material and its form, with certain processes exclusively utilizing a particular type of electrode. For example, certain types of metal inert gas (MIG) welding processes, which form part of a larger group sometimes referred to as gas metal arc welding (GMAW).

In GMAW welding, an electrode in the form of a wire is consumed by the progressing weld pool, melted by the heat of an arc between the electrode wire and the workpiece. The wire is continuously fed from a spool through welding gun where a charge is imparted to the wire to create the arc. The electrode configurations used in these processes are often referred to as either solid wire, flux cored or metal cored. Each type is considered to have distinct advantages and disadvantages over the others, and careful adjustments to the welding process and weld settings may be required to optimize their performance. For example, solid wire, while less expensive than the other types, is typically used with inert shielding gases, which can be relatively expensive. Flux cored wires may not require separate shielding gas feeds, but are more expensive than solid wires. Metal cored wires do require shielding gas, but these may be adjusted to mixes that are less expensive than those required for solid wires. Although metal cored wires offer distinct advantages over the other electrode types, its adoption has not been as widespread as solid wires.

All three of these electrode types may be used with different transfer modes, referring to the mechanical and electromechanical phenomena of moving metal from the electrode tip to the progressing weld bead. A number of such transfer modes exist, such as short circuit transfer, globular transfer, spray transfer, and pulsed spray transfer. In practice, transfer physics may appear as a hybrid of these, and the actual material transfer may transition between them during welding, although the process and electrode are often selected to maintain a certain transfer mode.

While it has long been realized that metal cored wire electrodes offer are advantageous over their solid and flux cored counterparts for many reasons, improvements in processes are needed that can enhance their performance and adoption.

### BRIEF DESCRIPTION

The present disclosure summarizes newly developed combinations of processes and metal cored wire electrodes designed to fulfill these needs. The processes involved rely on spinning or reciprocating the arc, sometimes referred to as "spin-arc", typically by moving the electrode tip, and utilizing a metal cored wire electrode. Quite unexpectedly, the use of forced arc movement and metal cored wires is believed to provide very substantial improvements not obtainable or predictable based on previously known uses of spin-arc technologies or metal cored wire welding technologies. It is further believed that arc characteristics, weld pool characteristics, and penetration characteristics are unique to the synergy of the forced arc movement and metal cored wires. Further enhancements can be made through adjustments in such factors as the process parameters, the size and type of metal cored wire, the amount, frequency and pattern of movement, and so forth.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical representation of an exemplary welding system utilizing aspects of the present techniques;
FIG. 2 is a detailed view of an end portion of a metal cored electrode for use with the system of FIG. 1;
FIG. 3 is a diagrammatical view representing movement of the metal cored electrode in accordance with aspects of the present techniques;
FIG. 4 is a diagrammatical representation of a progressing weld bead utilizing a circular pattern for movement of a metal cored welding wire;
FIG. 5 is a similar illustration of a progressing weld bead utilizing a an elliptical path for a metal cored welding wire;
FIG. 6 is a further illustration of a progressing weld bead utilizing a differently oriented elliptical path for a metal cored welding wire;
FIG. 7 is a illustration of an exemplary arc location and transfer mode for a progressing weld bead utilizing a moving metal cored welding wire electrode; and
FIG. 8 is a timing diagram illustrating movement of a metal cored electrode together with an exemplary forced transfer trace.

### DETAILED DESCRIPTION

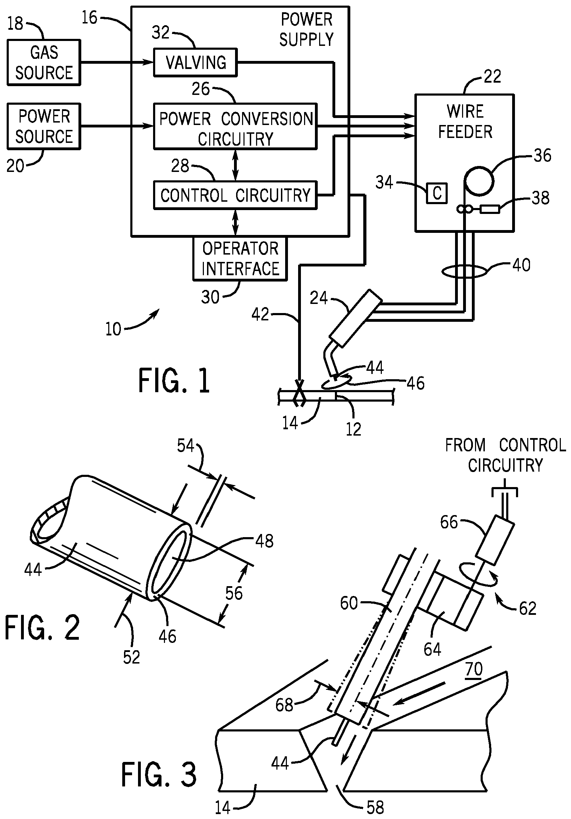

FIG. 1 illustrates an exemplary welding system 10 utilizing movement of a metal cored welding wire electrode. The system 10 is designed to produce a weld 12 and a workpiece 14. The weld may be of any type and oriented in any desired manner, including butt welds, lap welds, angled welds, out-of-position welds, and so forth. The system includes a power supply 16 that will typically be coupled to a gas source 18 and to a power source 20, such as the power grid. Other power sources may, of course, be utilized including generators, engine-driven power packs, and so forth. A wire feeder 22 is coupled to the power source 20 and supplies metal cored welding wire to a welding gun 24. As described in detail below, the metal cored welding wire is forced to move during creation of a weld bead, causing movement of an arc between a sheath of the metal cored welding wire and the workpiece.

In the illustrated embodiment, the power supply 16 will include power conversion circuitry 26 coupled to control circuitry 28 that regulates operation of the power conversion circuitry to produce power output suitable for the welding operation. The power supply may be designed and programmed to produce output power in accordance with a number of processes, welding regimes, and so forth, including constant current processes, constant voltage processes, pulsed processes, short circuit transfer processes, and so forth. In a presently contemplated embodiment, the control circuitry 28 controls the power conversion circuitry 26 to produce a pulsed welding regime that aids in the transfer of material from the metal cored welding wire to a progressing weld bead. However, other welding regimes may of course be used. An operator interface 30 allows a welding operator to alter both the welding process and the process settings. Moreover, in certain contemplated embodiments the operator interface may allow selection and/or modification of certain parameters related to movement of the welding gun and the metal cored welding wire. Finally, the power supply may include valving 32 for regulating the flow of shielding gas from the gas source 18.

The wire feeder 22 will typically include control circuitry, illustrated generally by reference numeral 34, which regulates the feed of welding wire from a spool 36. The spool 36 will contain a length of metal cored welding wire that is consumed during the welding operation. The welding wire is advanced by a drive assembly 38, typically through the use of a small electric motor under the control of the control circuitry 34. Welding wire, gas, control and feedback data may be exchanged between the wire feeder 22 and the welding gun 44 via a weld cable 40. The workpiece 14 is also coupled to the power supply by a work cable 42 to complete an electrical circuit through the electrode 44 when an electric arc is established between the electrode and the workpiece. As described more fully below, the electrode 44 advancing from the welding gun is forced to move, such as in a rotary motion as indicated by reference numeral 46.

The welding system illustrated in FIG. 1 may be designed for manual operation, although many of the applications for the present techniques will be automated. That is, the welding gun 24 will be secured to a robot which is programmed to position the welding torch at desired locations with respect to a workpiece. The robot may then act to initiate arcs between the electrode and the workpiece, and properly orient the welding gun and advance the welding gun and/or the workpiece along a predefined path where a weld bead is to be established to join two components. As described more fully below, in such automation applications, the present techniques allow for greatly enhanced travel speeds and improved weld bead characteristics.

The present techniques are designed specifically for use with metal cored welding wires of the type illustrated in FIG. 2. Such welding wires generally comprise a sheath 46 made of metal wrapped around a metal core 50. Various techniques are known for producing such metal cored welding wires, and are beyond the scope of the present invention. The characteristics of the metal cored welding wire may be selected for a particular application, particularly depending upon the metallurgy of the components to be joined, the type of shielding gas to be used, the anticipated fill volumes of the weld bead, and so forth. In the illustrated embodiment, certain geometries of the metal cored welding wire may assist in enhancing the benefits of the electrode movement. For example, the welding wire will typically be selected to have a desired diameter 52. The diameter comprises a sheath wall thickness 54 and a core diameter 56. These parameters may be altered and optimized to enhance the performance of the welding wire and to provide such characteristics as improved arch establishment, arc maintenance, material transfer, metallurgy of the resulting weld bead, weld bead penetration, and so forth. Examples of suitable welding wires for use in the present techniques include wires available from Hobart Brothers under the designation "Matrix" Premium Metal Core Wire.

FIG. 3 illustrates movement of the welding wire in a typical application. As shown in FIG. 3 a joint 58 is to be formed between workpieces, and the welding gun with the electrode 44 extending from it is positioned in close vicinity to the intended joint. An arc is then established between the electrode and the underlying metal to be joined. The electrode emanates from a contact element 60 which can be moved to force motion of the electrode and the established arc. For movement of the contact element, a motion control assembly 62 is provided in the welding gun. Although numerous techniques may be utilized for forcing such motions, in a presently contemplated arrangement, a cam 64 is turned by a motor 66 which itself is controlled and powered by the control circuitry of the system. The contact element and electrode are thus forced to move in a predefined pattern and at a predefined frequency as determined by the geometry and control of the motion control assembly 62. As illustrated in FIG. 3, the tip of the contact element, and thus the electrode may be moved a predetermined distance or radius 68 from the center line of the contact element. As described below, various patterns may be utilized for this motion. The electrode 44 is advanced during this process to form the desired weld bead. Moreover, the entire assembly is moved at a desired travel speed as indicated by reference numeral 70. As described below, the integration of electrode movement with metal cored welding wire may greatly enhance the quality of the resulting weld bead, and permit much higher travel speeds than can be obtained through electrode motion alone or the use of metal cored welding wires alone.

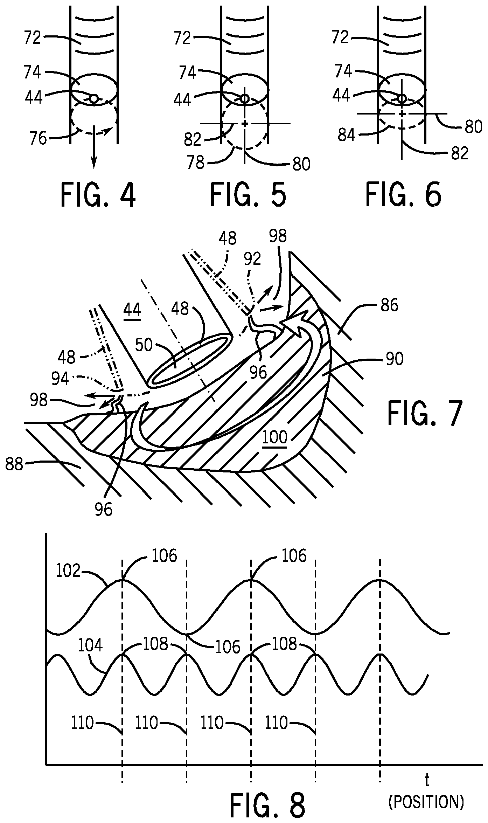

FIG. 4 illustrates an exemplary progressing weld bead 72 along with certain patterns of motion of the electrode 44. As will be appreciated by those skilled in the art, the weld bead progresses behind a weld pool or puddle 74 comprised of molted metal resulting from heating of the electrode and surrounding metal of the base materials of the workpiece. The electrode in the illustration of FIG. 4 is moved in a generally circular pattern as indicated by reference numeral 76. It is presently contemplated that such motion will be coordinated with the travel speed of the welding gun such that the electrode will be sufficiently close to the weld puddle 74 and peripheral regions of the workpiece to maintain the arc and to move the arc between these regions, maintaining the weld puddle while heating the electrode and surrounding metal. As described below, it is also contemplated that other coordinating factors may be employed, such as wire feed speeds, rates or frequencies of movement of the electrode, pulse frequencies for the welding process (e.g., currents and voltages applied to create the arc) and so forth. That is, the welding processes contemplated may be performed "open-loop", without coordinated control of the electrode motion and other welding parameters, or "closed-loop" with coordination and/or synchronization of the electrode motion with one or more process variables.

FIG. 5 illustrates a further possible pattern for movement of the electrode, in this case a generally elliptical pattern 78. The ellipse in this case has a major axis 80 along the direction of travel of the weld and torch and a minor axis 82 transverse to the direction of travel. Moreover, FIG. 6 illustrates a further possible pattern, namely a transverse elliptical pattern 84 in which a major axis 80 of the elliptical movement is transverse to the direction of travel of the weld and torch. It should be noted, however, any desired pattern may be utilized, and the motion control assembly may be adapted to implement these patterns, among others. For example, patterns defining zigzags, "figure 8's", transverse reciprocating lines, and so forth may be used and optimized for particular welds.

FIG. 7 shows an exemplary deposition and penetration scheme believed to operate when a metal cored welding wire is utilized with forced motion. That is, the electrode 44 is moved between workpieces 86 and 88 to be joined. A weld bead 90 forms that penetrates into the workpieces and creates a generally flat surface as the weld bead advances. In the illustration of FIG. 7, reference numeral 94 refers to a maximum approach of the sheath 48 of the welding wire toward workpiece 86, while reference numeral 94 represents a maximum approach of the sheath 48 to the workpiece 88.

It is believed that the arc established between the metal cored welding wire and the workpieces and/or the progressing weld puddle exists only between the sheath 48 and these elements. Accordingly, unique transfer locations are established as indicated by reference numeral 98. It has been observed that resulting welds are flatter than similar welds that may be established by electrode motion using solid wire electrodes. Moreover, it is believed that enhanced penetration into the base materials is obtained as indicated by reference numeral 100.

A number of benefits are believed to flow from the use of controlled, patterned movement with a metal cored welding wire. For example, higher deposition rates are possible with substantial increases in travel speeds, on the order of 50 to 100 percent higher than obtainable with either technique used alone. Moreover, better gap bridging is available with less aggressive arcs. The welds also exhibit better wetout, lower spatter, and less undercut. As mentioned above, weld beads also appear to be flatter and less bulbous than in the case of spin-arc techniques used with solid welding wires.

Parameters that may be varied in the technique may include factors such as the rate of movement of the electrode, and the degree of movement of the electrode about a normal or central position. In particular, while the invention is certainly not limited to a circular pattern, where circular patterns have been used, it is believed that rates of rotation higher than 50 Hz, and extending to 100-150 Hz and higher may be desirable, obtaining flatter weld beads and higher deposition rates. Moreover, diameters of rotation are presently contemplated on the order of 1.5 mm, but higher diameters, such as on the order of 2.5 mm may be desired. Moreover, it may be desirable to coordinate and synchronize the movement (e.g., rotation) of the metal cored electrode with a pulsed waveform, with wire feed speeds, and so forth. It may also be desirable to provide electrode movement that is synchronized or coordinated with gas flow. These various parameters may assist in the penetration into the base materials, the deposition of the electrode material, the maintenance of the arc, as well as other welding parameters.

It is also believed that the weld puddle may move better with movement of the metal cored electrode, possibly due to mechanical forces (e.g., centrifugal forces) imparted on the molten ball or spray that develops at the electrode tip. The process may thus be able to run cooler than previous processes. Enhanced benefits may be offered as well on certain types of workpieces and workpiece metallurgies, particularly galvanized workpieces. Furthermore, the process may allow for less expensive shielding gasses, such as CO2 rather than Argon mixes currently used with such welding electrodes.

FIG. 8 illustrates an exemplary timing diagram relating movement of the metal cored welding electrode with forced transfer of material from the electrode tip. In diagram of FIG. 8, electrode tip movement is indicated by trace 102 over time, while forced transfer is indicated by trace 104. In a circular movement pattern, a generally sinusoidal motion will be expected from the point of view of any particular point in the advancing weld bead or, the puddle, or any particular location of the joint. At points 106 in this motion, the sheath of the electrode may most closely approach the sides of the base materials of the workpiece. The welding process may be adapted, such as by control of pulsed welding regimes, to force or enhance transfer of material from the electrode at these locations, as indicated generally by reference numeral 108. These times will typically occur periodically as indicated by time lines 110. These and many other control regimes may be envisaged as described above for coordinating transfer modes with motion of the metal cored welding electrode, particularly making use of the establishment of the arc with the sheath of the electrode only.

The foregoing technique has been tested with a welding torch comprising a servo motor and a cam to rotate the contact tip in a 2.0 mm oscillation at what is believed to be approximately 50 Hz. Standard contact tips of 45 mm in length were employed. A metal cored welding electrode of 0.045 inches in diameter was employed, the electrode type being ER70S-6 solid wire. A 90-10 CO2 shielding gas mixture was utilized. A pulse welding regime was utilized based upon the Auto Access power supply with running an Accu-Pulse process available from Miller Electric Mfg. of Appleton, Wisconsin. This base line test was run at 39 inches per minute, a speed optimized for a quality fillet weld on 12 gauge material. Based upon these settings, travel speed was increase to 59 inches per minute, approximately 50% above the base line. Test conditions were varied in the attempt to optimize welding results. Limiting factors appeared to be undercut. Regardless of the welding parameters, high ropey beads and undercut remain.

In a second test, the same welding wire and gas were used with the same welding power supply and welding process. In this test electrode movement was utilized, however, as described above. The travel speed for this second test was set at 59 inches per minute. Test conditions were varied in an attempt to optimize the welding results. A tight driving arc appeared to dig deep into the base metal and created a cavitation affect. The electrode movement process reduced the amount of undercut and significantly flattened the face of the weld. However, the weld puddle did not appear to push-out to the toes of the weld, ultimately leaving some undercut present.

In a third test, an E70C-6M Vantage and Matrix metal core welding wire of 0.045 inches diameter was utilized (available commercially from Hobart Brothers). The welding gas mixture was identical to the previous tests, as were the power supply and welding process. In this test with the metal cored welding wire, electrode movement was used again with a 59 inches per minute travel speed setting. Test conditions were varied in an attempt to optimize the welding results. The arc generated with the metal cored wire was significantly softer than in the case of the solid wire. The reduction in cavitations allowed the weld puddle to fill much better in the toes, nearly eliminating all undercut at 59 inches per minute. The weld leg size was equal to the material thickness (0.125 inches). While it is believed that the correct weld size for the material, the automotive industry over-welds such materials to compensate for variations in part fit-up and to facilitate visual inspection.

In a fourth test, the same metal cored welding wire was utilized, but in a 0.052 diameter. The same gas mixture, power supply and welding process were utilized, with again with electrode movement. The test was run again at 59 inches per minute travel speed. Here again, test conditions were varied in an attempt optimize the welding results. The arc generated with the metal cored wire was significantly softer than the case of solid wires. The reduction in the cavitations allowed the weld puddle to fill much better at the toes, nearly eliminating all undercut at 59 inches per minute. The weld leg size improved with a larger bead width. In this test the robustness of the process was tested by moving the wire out of the joint by approximately 1.2 mm both high and low. The weld was also tested with 1.2 mm gap. Welding results show the process to have a very robust window even at 59 inches per minute travel speeds.

A further test was run with the same metal cored welding wires in the previous test, the same gas mixture, the same power supply and welding process. In this test a higher travel speed of 80 inches per minute was used on a horizontal lap joint. Test conditions were gain varied to optimize the welding results. The arc generated with the metal cored wire was significantly softer than the solid wire. The robustness of the process was tested with a gap varying from 0-1.2 mm and back. Welding results show the process to have a very robust window even at 80 inches per minute travel speeds. The amount of spatter generated on all metal cored electrode tests was significantly less than the amounts seen with traditional solid wire applications on similar joints.

While only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A welding method comprising:
establishing an arc between a welding electrode (44) and a workpiece;
feeding the electrode (44) from a welding torch while cyclically moving the electrode in a desired pattern; and
advancing the welding torch or the workpiece (14) to establish a weld bead the welding electrode (44) being a metal cored welding electrode comprising a sheath (46) and a core (50);
**characterized in that**
said electrode (44) is moved by a motion control assembly within the welding torch to maintain an arc only between the sheath (46) and the workpiece (14),
wherein the arc is established and maintained via a pulsed welding process,
wherein at least one parameter of the pulsed welding process is controlled in coordination with movement of the electrode (44), synchronizing movement of the metal cored electrode (44) with a pulsed waveform,
wherein the rates of movement of the electrode (44) being at least 100 Hz.

2. The method of claim 1, wherein the electrode (44) is moved in a generally circular pattern.

3. The method of claim 1, wherein the electrode (44) is moved in a generally elliptical pattern.

4. The method of claim 3, wherein the elliptical pattern has a major axis generally along a direction of travel of the welding torch, or wherein the elliptical pattern has a major axis generally transverse to a direction of travel of the welding torch.

5. The method of claim 1, wherein the welding torch or the workpiece (14) is advanced at a rate of at least 150 cm (59 inches) per minute.

6. The method of claim 5, wherein the welding torch or the workpiece (14) is advanced at a rate of at least 203,2 cm (80 inches) per minute.

7. A welding system (10) comprising:
a power supply (16) configured to produce power suitable for welding;
a wire feeder (22) coupled to the power supply (16) and configured to feed a welding electrode (44);
a welding torch coupled to the wire feeder (22) and configured to establish a welding arc between the electrode (44) and a workpiece (14) utilizing the power from the power supply (16) while cyclically moving the electrode (44) in a desired pattern ,
the welding electrode (44) being a metal cored welding electrode comprising a sheath (46) and a core (50);
**characterized in that**
the electrode (44) is moved by a motion control assembly (62) within the welding torch to maintain an arc only between the sheath (46)and the workpiece (14);
wherein the power supply (16) is configured to implement a pulsed welding process to produce pulsed power for the arc; and
wherein the power supply (16) and/or the welding torch is configured to coordinate cyclical movement of the electrode (44) with pulses of the pulsed welding process,
wherein the rates of movement of the electrode (44) being at least 100 Hz.

8. The system of claim 7, wherein the motion control assembly is configured to move the electrode (44) in a generally circular pattern.

9. The system of claim 7, wherein the motion control assembly is configured to move the electrode (44) in a generally elliptical pattern.

10. The system of claim 9, wherein the elliptical pattern has a major axis generally along a direction of travel of the welding torch, or
wherein the elliptical pattern has a major axis generally transverse to a direction of travel of the welding torch.

## Patentansprüche

1. Schweißverfahren, umfassend:
Herstellen eines Lichtbogens zwischen einer Schweißelektrode (44) und einem Werkstück;
Zuführen der Elektrode (44) von einem Schweißbrenner bei gleichzeitigem zyklischem Bewegen der Elektrode in einem gewünschten Muster; und
Vorschieben des Schweißbrenners oder des Werkstücks (14), um eine Schweißraupe herzustellen, wobei die Elektrode (44) eine metallgefüllte Elektrode ist, die einen Mantel (46) und einen Kern (50) umfasst;
**dadurch gekennzeichnet, dass**
die Elektrode (44) durch eine Bewegungssteuerungsanordnung innerhalb des Schweißbrenners bewegt wird, um einen Lichtbogen nur zwischen dem Mantel (46) und dem Werkstück (14) aufrechtzuerhalten,
wobei der Lichtbogen durch einen Impulsschweißprozess hergestellt und aufrechterhalten wird,
wobei mindestens ein Parameter des Impulsschweißprozesses in Koordination mit Bewegung der Elektrode (44) gesteuert wird, wobei Bewegung der metallgefüllten Elektrode (44) mit einer Impulswellenform synchronisiert wird,
wobei Bewegungsraten der Elektrode (44) mindestens 100 Hz betragen.

2. Verfahren nach Anspruch 1, wobei die Elektrode (44) in einem im Allgemeinen kreisförmigen Muster bewegt wird.

3. Verfahren nach Anspruch 1, wobei die Elektrode (44) in einem im Allgemeinen elliptischen Muster bewegt wird.

4. Verfahren nach Anspruch 3, wobei das elliptische Muster eine Hauptachse im Allgemeinen entlang einer Bewegungsrichtung des Schweißbrenners aufweist, oder wobei das elliptische Muster eine Hauptachse im Allgemeinen quer zu einer Bewegungsrichtung des Schweißbrenners aufweist.

5. Verfahren nach Anspruch 1, wobei der Schweißbrenner oder das Werkstück (14) mit einer Geschwindigkeit von mindestens 150 cm (59 Zoll) pro Minute vorgeschoben wird.

6. Verfahren nach Anspruch 5, wobei der Schweißbrenner oder das Werkstück (14) mit einer Geschwindigkeit von mindestens 203,2 cm (80 Zoll) pro Minute vorgeschoben wird.

7. Schweißsystem (10), umfassend:
eine Leistungsversorgung (16), die zum Erzeugen von zum Schweißen geeigneter Leistung ausgelegt ist,
eine Drahtvorschubeinheit (22), die mit der Leistungsversorgung (16) gekoppelt und zum Zuführen einer Schweißelektrode (44) ausgelegt ist;
einen Schweißbrenner, der mit der Drahtvorschubeinheit (22) gekoppelt und zum Herstellen eines Schweißlichtbogens zwischen der Elektrode (44) und einem Werkstück (14) unter Verwendung der Leistung von der Leistungsversorgung (16) bei gleichzeitigem zyklischem Bewegen der Elektrode (44) in einem gewünschten Muster ausgelegt ist,
die Schweißelektrode (44) eine metallgefüllte Schweißelektrode ist, die einen Mantel (46) und einen Kern (50) umfasst;
**dadurch gekennzeichnet, dass**
die Elektrode (44) durch eine Bewegungssteuerungsanordnung (62) innerhalb des Schweißbrenners bewegt wird, um einen Lichtbogen nur zwischen dem Mantel (46) und dem Werkstück (14) aufrechtzuerhalten:
wobei die Leistungsversorgung (16) so ausgelegt ist, dass sie einen Impulsschweißprozess implementiert, um Impulsleistung für den Lichtbogen zu erzeugen; und
wobei die Leistungsversorgung (16) und/oder der Schweißbrenner zum Koordinieren von zyklischer Bewegung der Elektrode (44) mit Impulsen des Impulsschweißprozesses ausgelegt sind,
wobei die Bewegungsraten der Elektrode (44) mindestens 100 Hz betragen.

8. System nach Anspruch 7, wobei die Bewegungssteuerungsanordnung zum Bewegen der Elektrode (44) in einem im Allgemeinen kreisförmigen Muster ausgelegt ist.

9. System nach Anspruch 7, wobei die Bewegungssteuerungsanordnung zum Bewegen der Elektrode (44) in einem im Allgemeinen elliptischen Muster ausgelegt ist.

10. System nach Anspruch 9, wobei das elliptische Muster eine Hauptachse im Allgemeinen entlang einer Bewegungsrichtung des Schweißbrenners aufweist, oder
wobei das elliptische Muster eine Hauptachse im Allgemeinen quer zu einer Bewegungsrichtung des Schweißbrenners aufweist.

## Revendications

1. Procédé de soudage comprenant les étapes suivantes :
établir un arc entre une électrode de soudage (44) et une pièce de fabrication ;
alimenter l'électrode (44) à partir d'un chalumeau soudeur tout en déplaçant cycliquement l'électrode selon un motif souhaité ; et
faire avancer le chalumeau soudeur ou la pièce de fabrication (14) pour établir un cordon de soudure,
l'électrode de soudage (44) étant une électrode de soudage à âme métallique comprenant une gaine (46) et une âme (50) ;
**caractérisé en ce que**
ladite électrode (44) est déplacée par un ensemble de commande de déplacement à l'intérieur du chalumeau soudeur pour maintenir un arc uniquement entre la gaine (46) et la pièce de fabrication (14),
l'arc étant établi et maintenu par le biais d'un procédé de soudage pulsé,
au moins un paramètre du procédé de soudage pulsé étant contrôlé en coordination avec le déplacement de l'électrode (44), synchronisant le déplacement de l'électrode à âme métallique (44) avec une forme d'onde pulsée,
les fréquences de déplacement de l'électrode (44) étant d'au moins 100 Hz.

2. Procédé de la revendication 1, dans lequel l'électrode (44) est déplacée selon un motif généralement circulaire.

3. Procédé de la revendication 1, dans lequel l'électrode (44) est déplacée selon un motif généralement elliptique.

4. Procédé de la revendication 3, dans lequel le motif elliptique a un grand axe généralement le long d'une direction de déplacement du chalumeau soudeur, ou dans lequel le motif elliptique a un grand axe généralement transversal à une direction de déplacement du chalumeau soudeur.

5. Procédé de la revendication 1, dans lequel le chalumeau soudeur ou la pièce de fabrication (14) est avancé à une vitesse d'au moins 150 cm (59 pouces) par minute.

6. Procédé de la revendication 5, dans lequel le chalumeau soudeur ou la pièce de fabrication (14) est avancé à une vitesse d'au moins 203,2 cm (80 pouces) par minute.

7. Système de soudage (10) comprenant :
une alimentation (16) configurée pour produire de l'énergie appropriée pour un soudage ;
un dévidoir de fil (22) couplé à l'alimentation (16) et configuré pour alimenter une électrode de soudage (44) ;
un chalumeau soudeur couplé au dévidoir de fil (22) et configuré pour établir un arc de soudage entre l'électrode (44) et une pièce de fabrication (14) en utilisant l'énergie provenant de l'alimentation (16) tout en déplaçant cycliquement l'électrode (44) selon un motif souhaité,
l'électrode de soudage (44) étant une électrode de soudage à âme métallique comprenant une gaine (46) et une âme (50) ;
**caractérisé en ce que**
l'électrode (44) est déplacée par un ensemble de commande de déplacement (62) à l'intérieur du chalumeau soudeur pour maintenir un arc uniquement entre la gaine (46) et la pièce de fabrication (14) ;
l'alimentation (16) étant configurée pour mettre en oeuvre un procédé de soudage pulsé pour produire de l'énergie pulsée pour l'arc ; et
l'alimentation (16) et/ou le chalumeau soudeur étant configurés pour coordonner un déplacement cyclique de l'électrode (44) avec des impulsions du procédé de soudage pulsé,
les fréquences de déplacement de l'électrode (44) étant d'au moins 100 Hz.

8. Système de la revendication 7, dans lequel l'ensemble de commande de déplacement est configuré pour déplacer l'électrode (44) selon un motif généralement circulaire.

9. Système de la revendication 7, dans lequel l'ensemble de commande de déplacement est configuré pour déplacer l'électrode (44) selon un motif généralement elliptique.

10. Système de la revendication 9, dans lequel le motif elliptique a un grand axe généralement le long d'une direction de déplacement du chalumeau soudeur, ou
dans lequel le motif elliptique a un grand axe généralement transversal à une direction de déplacement du chalumeau soudeur.
